# EUROPÄISCHE PATENTSCHRIFT

(11) **EP 1 109 847 B1**
(45) Veröffentlichungstag und Bekanntmachung des Hinweises auf die Patenterteilung: **10.08.2005**
(21) Anmeldenummer: 00952868.8
(22) Anmeldetag: 30.06.2000
(51) Int. Cl.: C08G 18/20, C08G 18/76

(54) **EMISSIONSARME UND HYDROLYSESTABILE POLYURETHAN-SCHAUMSTOFFE**
LOW-EMISSION, POLYURETHANE FOAMS WHICH ARE STABLE DURING HYDROLYSIS
MOUSSES DE POLYURETHANNE A FAIBLE EMISSION ET STABLES A L'HYDROLYSE

(30) Priorität: 01.07.1999 DE 19930098
(43) Veröffentlichungstag der Anmeldung: 27.06.2001
(73) Patentinhaber: Performance Chemicals Handels GmbH, 21244 Buchholz (DE)
(72) Erfinder: KLOCKEMANN, Werner, D-21244 Buchholz (DE); SIKORSKI, Matthias, D-22117 Hamburg (DE); CORDELAIR, Holger, D-21073 Hamburg (DE)
(74) Vertreter: Schupfner, Georg U.
(86) Internationale Anmeldenummer: PCT/DE2000/002049
(87) Internationale Veröffentlichungsnummer: WO 2001/002459

(56) Entgegenhaltungen:
- US-A- 3 728 291
- US-A- 3 912 689
- US-A- 5 539 007
- US-A- 5 786 402

## Beschreibung

Die Erfindung betrifft ein Verfahren zur Herstellung emissionsarmer und hydrolysestabiler Polyurethan-Schaumstoffe durch Einsatz spezieller Katalysatoren, Polyurethan-Schaumstoffe hergestellt nach diesem Verfahren, sowie in diesem Verfahren einzusetzende Katalysatorzusammensetzungen.

Als Polyurethane werden Polymere mit sehr unterschiedlicher Zusammensetzung bezeichnet. Allen Polyurethanen ist gemeinsam, daß sie nach dem Diisocyanat-Polyadditionsverfahren hergestellt werden und als charakteristisches Kettenglied Urethan-Gruppen aufweisen. Der Anteil der Urethan-Gruppen gegenüber anderen die Monomereinheiten verknüpfenden Gruppen kann jedoch von untergeordneter Bedeutung sein. Neben der Urethan-Bindung können unter anderem Harnstoff-, Amid-, Biuret-, Acylharnstoff-, Uretonimin-, Isocyanurat- und Carbodiimid-Bindungen durch die Isocyanat-Reaktion ausgebildet werden.

In vielen industriell bedeutenden Polyurethan-Kunststoffen verknüpfen die Urethahgruppen Polyalkylenether- oder Polyestersequenzen, die ihrerseits Molekulargewichte von 200 bis 6000 g/mol aufweisen können.

Bedingt ist die Vielfalt möglicher Verknüpfungen nicht nur durch die Reaktivität der Isocyanat-Bindung, sondern auch durch die Vielzahl unterschiedlicher gegenüber der Isocyanat-Gruppe reaktionsfähiger Monomere. Weiterhin können hinsichtlich ihrer Funktionalität unterschiedliche Monomere gleichzeitig nebeneinander eingesetzt werden. Die gebräuchlichsten Monomere neben den Diisocyanaten weisen Alkohol-, Carbonsäure- und/oder Amin-Gruppen auf. Daneben spielt aber auch die Reaktion der Isocyanat-Gruppe mit Wasser eine wichtige Rolle.

Die Reaktionen der NCO-Gruppe sind ganz außerordentlich empfindlich gegenüber Katalysatoren der verschiedensten Art. Sowohl Lewis-Basen als auch Lewis-Säuren sind wirksame Katalysatoren. Die wichtigsten Lewis-Basen sind tertiäre Amine unterschiedlichster Struktur. Die wichtigsten katalytisch wirkenden Lewis-Säuren sind zinnorganische Metall-Verbindungen. Die Katalysatoren werden oft als System, d.h. als als Kombination mehrerer Katalysatoren, etwa einer Lewis-Base mit einer LewisSäure, eingesetzt. Der Katalysator/das Katalysator-System wird zur Beschleunigung von zwei manchmal drei Hauptreaktionen eingesetzt, die gleichzeitig und oft in Konkurrenz zueinander ablaufen.

Eine dieser Reaktionen ist die kettenverlängernde Isocyanat-Hydroxyl-Reaktion, bei der ein hydroxylhaltiges Molekül mit einem isocyanathaltigen Molekül unter Bildung eines Urethans reagiert. Bei dieser Reaktion wird ein sekundäres Stickstoffatom in den Urethangruppen erzeugt. Sind neben den Hydroxylgruppen auch noch andere reaktive Wasserstoff aufweisende Gruppen, wie etwa Amin-Gruppen, anwesend, tragen auch andere chemische Verknüpfungen (z.B. Harnstoff-Gruppen) zum Kettenaufbau bei.

Eine zweite Reaktion ist die vernetzende Isocyanat-Urethan-Reaktion, bei der ein isocyanathaltiges Molekül mit einer Urethangruppe reagiert, die ein sekundäres Stickstoffatom enthält.

Die dritte Reaktion ist die Isocyanat-Wasser-Reaktion, bei der ein Molekül mit Isocyanat-Endgruppe unter Bildung einer Harnstoff-Gruppe verlängert wird und Kohlendioxid erzeugt. Das freiwerdende Gas wirkt als Treibmittel, um den Schaum zu blähen oder das Blähen des Schaums zu unterstützen. Diese Reaktion ist eine Treibreaktion. Durch die Isocyanat-Wasser-Reaktion wird in-situ entweder das gesamte Gas oder auch nur ein Teil davon für die Schaumreaktion erzeugt.

Alle drei Reaktionen müssen gleichzeitig mit optimal aufeinander abgestimmter Geschwindigkeit ablaufen, damit eine gute Schaumstruktur erhalten wird. Wenn die Kohlendioxidentwicklung im Vergleich zur Kettenverlängerung zu rasch verläuft, fällt der Schaum zusammen. Wenn die Kettenverlängerung im Vergleich zur Kohlendioxidentwicklung zu rasch erfolgt, wird die Steighöhe des Schaums begrenzt, wodurch ein Schaum hoher Dichte mit einem hohen prozentualen Anteil an schlecht ausgebildeten Zellen entsteht. Bei Fehlen einer ausreichenden Vernetzung ist der Schaum nicht stabil.

Es ist bekannt, daß tertiäre Amine die zweite Vernetzungsreaktion wirksam katalysieren. Diese werden oft als Gel-Katalysatoren bezeichnet. Einige der tertiären Amine sind aber auch wirksame Katalysatoren der dritten Reaktion, der Isocyanat-Wasser-Reaktion und können somit auch als Blow-Katalysatoren (Blas- oder Treib-Katalysatoren) bezeichnet werden.

Die Herstellung von Polyurethan-Schaumstoffen durch Umsetzung von höhermolekularen vorzugsweise Polyester- oder Polyetheresterpolyolen und gegebenenfalls Kettenverlängerungs- und/oder Vernetzungsmitteln mit organischen und/oder modifizierten organischen Polyisocyanaten ist bekannt und wird in zahlreichen Patent- und Literaturveröffentlichungen beschrieben. Polyurethan-Schaumstoffe werden insbesondere für Möbel, für Matratzen, Liegen und Sitzpolster eingesetzt.

Die zur Herstellung der erfindungsgemäßen Polyurethan-Schaumstoffe einsetzbaren Ausgangskomponenten sind nachstehend unter (1) bis (6) beispielhaft erläutert.

### (1) Organische und/oder modifizierte organische Polyisocyanate

Zur Herstellung der erfindungsgemäßen Polyurethan-Schaumstoffe eignen sich die bekannten organischen, z. B. aliphatischen, cycloaliphatischen, arylaliphatischen, cycloaliphatisch-aromatischen und vorzugsweise aromatischen Di- und/oder Polyisocyanate.

Gebräuchliche Vertreter aliphatischer Polyisocyanate sind z.B. 1,6-Diisocyanatohexan; 3,5,5-Trimethyl-1-isocyanato-3-isocyanato-methylcyclohexan; 4,4'-Diisocyanatodicyclohexylmethan, trimeres Hexandiisocyanat und 2,6-Diisocyanatohexansäuremethylester.

Im einzelnen seien als aromatische Polyisocyanate beispielhaft genannt: 4,4- und 2,4-Diphenylmethandiisocyanat (MDI), Mischungen aus MDI-Isomeren und Polyphenylpolymethylen-polyisocyanaten, 2,4-und 2,6-Toluylen-diisocyanat (TDI) sowie die entsprechenden handelsüblichen Isomerenmischungen.

Geeignet sind auch sogenannte modifizierte mehrwertige Isocyanate, d. h. Produkte, die durch chemische Umsetzung organischer und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/ oder Urethangruppen enthaltende Di- und/oder Polyisocyanate.

Im einzelnen kommen beispielsweise in Betracht: Urethangruppen enthaltende Prepolymere mit einem NCO-Gehalt von 14 bis 2,8 Gew.-% oder Quasiprepolymere die hergestellt werden durch Umsetzung von Diolen, Oxalkylenglykolen und/oder Polyoxyalkylenglykolen mit Polyisocyanaten.

### (2) Verbindungen mit mindestens zwei reaktiven Wasserstoffatomen

Hierfür kommen die bei der Herstellung von Polyurethanweichschaumstoffen üblichen H-funktionellen vorzugsweise höhermolekularen Verbindungen, wie Polyether- und Polyesterpolyole, aber auch Polythioetherpolyole, Polyesteramide, hydroxylgruppenhaltige Polyacetale und hydroxylgruppenhaltige aliphatische Polycarbonate oder Mischungen aus mindestens zwei der genannten Verbindungen in Betracht. Besonders geeignet sind Polyetherpolyole, wie etwa Polypropylenoxid oder Polyethylenoxid bzw. deren Copolymerisate, die mit Hilfe di- oder mehrfunktioneller Alkohole als Startermoleküle hergestellt worden sind. Die Polyeder-Komponente weist vorzugsweise ein Molekulargewicht zwischen 800 g/mol und 2000 g/mol und eine Funktionalität von 1,5 bis 3 auf.

Zur Herstellung der erfindungsgemäß eingesetzten Polyester werden di- und trifunktionelle Polyole mit Dicarbonsäuren bzw. deren Anhydriden polykondensiert. Geeignete Polyole sind z.B. Ethylenglykol, 2-Propandiol, 1,4-Butandiol, 1,6-Hexandiol, Glycerin, Trimethylolpropan, Pentaerythrit, Glycerin und Hexantriol. Geeignete Dicarbonsäuren bzw. Anhydride sind Bernsteinsäure, Adipinsäure, Phthalsäure und Isophthalsäure. Die Polyester weisen vorzugsweise ein Molekulargewicht zwischen 300 und 3000 auf und eine verhältnismäßig hohe Hydroxyzahl bei einer verhältnismäßig niedrigen Säurezahl.

Geeignet sind auch Mischungen aus Polyetherpolyolen und Polyether-polyaminen. Geeignete Polyesterpolyole können beispielsweise aus organischen Dicarbonsäuren mit 2 bis 12 Kohlenstoffatomen, und mehrwertigen Alkoholen mit 2 bis 12 Kohlenstoffatomen, hergestellt werden.

Zu den einsetzbaren Polyesteramiden zählen z. B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Harnstoffgruppen lassen sich in die erfindungsgemäß hergestellten Polyurethane durch Einsatz von Wasser oder Diaminen einführen. Ethylendiamin, 1,2-Propylendiamin, Diaminocyclohexan oder Piperizin wirken z.B. als Kettenverlängerer oder Vernetzungsmittel. Polyurethan-Präpolymere mit Amin-Endgruppen sind reaktiver als solche mit Hydroxygruppe, so daß diese Polyurethane schneller aushärten. Ebenso können Verbindungen mit Polymercapto-Gruppen eingesetzt werden.

### (3) Niedermolekulare Kettenverlängerungs- und/ oder Vernetzungsmittel (fakultativ)

Als derartige Mittel kommen polyfunktionelle, insbesondere di- und trifunktionelle Verbindungen mit Molekulargewichten von 18 bis ungefähr 400, vorzugsweise von 62 bis ungefähr 300, in Betracht. Verwendet werden beispielsweise Di- und/ oder Trialkanolamine, wie z. B. Diethanolamin und Triethanolamin, aliphatische Diole und/oder Triole mit 2 bis 6 Kohlenstoffatom im Alkylenrest, wie z. B. Ethan-, 1,4-Butan-, 1,5-Pentan-, 1,6-Hexandiol, Glycerin und/oder Trimethylolpropan, Wasser und niedermolekulare Ethoxylierungs- und/oder Propoxylierungsprodukte, hergestellt aus den vorgenannten Dialkanolaminen, Trialkanolaminen, Diolen und/oder Triolen sowie aliphatischen und/oder aromatischen Diaminen.

Vorzugsweise eingesetzt werden Dialkanolamine, Diole und/oder Triole und insbesondere Ethandiol, Butandiol-1,4, Hexandiol-1,6, Diethanolamin, Trimethylolpropan und Glycerin oder Mischungen aus mindestens zwei der vorgenannten Verbindungen.

### (4) Treibmittel

Zu Treibmitteln, welche zur Herstellung der erfindungsgemäßen Polyurethan-Schaumstoffe verwendet werden, gehört vorzugsweise Wasser, das mit Isocyanatgruppen unter Bildung von Kohlendioxid als Treibgas reagiert. Die Wassermengen, die zweckmässigerweise eingesetzt werden, betragen 0,1 bis 8 Gew.- Teile, vorzugsweise 1,0 bis 3,5 Gew.-Teile, bezogen auf 100 Gew.-Teile Verbindungen mit mindestens zwei reaktiven Wasserstoffatomen.

Im Gemisch mit Wasser können auch physikalisch wirkende Treibmittel eingesetzt werden, wobei zur Herstellung der PUR- Weichschaumstoffe vorzugsweise ausschließlich physikalisch wirkende Treibmittel Anwendung finden. Geeignet sind Flüssigkeiten, welche gegenüber den organischen, gegebenenfalls modifizierten Polyisocyanaten innert sind und Siedepunkte unter 100 °C, vorzugsweise unter 50 °C, bei Atmosphärendruck aufweisen, so daß sie unter dem Einfluß der exothermen Polyadditionsreaktion verdampfen. Beispiele derartiger, vorzugsweise verwendbarer Flüssigkeiten sind niedrigsiedende Kohlenwasserstoffe, Ether, Furan, Aceton und Methylethylketon, Ester, wie Ethylacetat und Methylformiat, oder halogenierte Kohlenwasserstoffe sowie Edelgase. Die erforderliche Menge an physikalisch wirkenden Treibmitteln kann in Abhängigkeit von der gewünschten Schaumstoffdichte auf einfache Weise ermittelt werden.

### (5) Flammschutzmittel (fakultativ)

Zur Erhöhung der Flammwidrigkeit unter gleichzeitiger Reduzierung der Rauchgasdichte im Brandfalle werden als Flammschutzmittel beispielsweise Melamin oder Blähgraphit in wirksamen Mengen verwendet. Weiterhin kommen als Flammschutzmittel Stärke, Phosphorverbindungen, wie z.B. Trikresylphosphat, und anorganische Salze und vorzugsweise modifizierte oder unmodifizierte Ammoniumpolyphosphate zum Einsatz.

### (6) Weitere Hilfsmittel und/oder Zusatzstoffe (fakultativ)

Der Reaktionsmischung können gegebenenfalls auch noch weitere Hilfsmittel und/oder Zusatzstoffe einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe, Weichmacher, Trocknungsmittel, Füllstoffe, latente Härter, Haftungsverbesserer, Schaumstabilisatoren, die auch als Silikonöle oder Emulgatoren bekannt sind. Dies sind z.B. Polysiloxanpolyether-copolymerisate unterschiedlichsten Aufbaus. Weitere mögliche Zusätze sind Hydrolysestabilisatoren, Oxydationsstabilisatoren, UV-Stabilisatoren, Flammschutzmittel oder auch Farbstoffe, vorzugsweise in Form von Farbpasten.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole.

### (7) Katalysatoren

Zur Beschleunigung der Umsetzung zwischen den Verbindungen mit mindestens zwei reaktiven Wasserstoffatomen , hydroxylgruppenhaltigen Kettenverlängerungs- und/oder Vernetzungsmitteln und Wasser als Treibmittel und den organischen und/oder modifizierten organischen Polyisocyanaten werden Polyurethankatalysatoren zugegeben.

Die Polyurethan-Schaumstoffe können nach dem One-Shot-Verfahren durch Vermischen von zwei Komponenten hergestellt werden. Somit müssen die beiden Komponenten vor Herstellung der Polyurethanweichschaumstoffe nur noch intensiv gemischt werden. Die Reaktionsmischungen können in offenen oder geschlossenen Formwerkzeugen sowie zu Blockschaumstoffen verschäumt werden.

Im Rahmen der Erfindung können die Polyurethane nach unterschiedlichen Herstellungsverfahren hergestellt sein. Nach dem One-Shot-Verfahren werden Polyurethane vorzugsweise in Abwesenheit von Lösungsmitteln in Gegenwart sämtlicher Reaktionskomponenten hergestellt. Das Verfahren setzt eine annähernd vergleichbare Reaktionsgeschwindigkeit der verschiedenen H-aktiven Komponenten und der Polyisocyanate voraus.

Man unterscheidet hiervon das Präpolymerverfahren. Polyurethan-Präpolymere sind Zwischenstufen der Isocyanat-Polyaddition. Man unterscheidet NCO-Präpolymere mit endständigen NCO-Gruppen und Hydroxy-Präpolymere. Die NCO-Präpolymere haben eine besondere Bedeutung, da sie mit einer Vielzahl von aktiven Wasserstoff enthaltenden Verbindungen ausgehärtet werden können. Sie werden durch Umsetzung von Di- bzw. Polyhydroxyverbindungen mit einem molaren Überschuß an Di- bzw. Polyisocyanat erhalten. Diese Gemische können noch einen beträchtlichen Prozentsatz des monomeren Isocyanates enthalten.

Zweikomponentensysteme bestehen meist aus einer Polyhydroxidkomponente - die auch schon durch ein Diisocyanat zu einem Präpolymer mit endständigen OH-Gruppen verlängert sein kann - als Hauptkomponente und einem Isocyanat-Addukt als Vemetzer.

Es ist die Aufgabe der vorliegenden Erfindung, einen Katalysator bereitzustellen, der es erlaubt, emissionsarme bzw. emissionsfreie PU-Schaumstoffe herzustellen. Emissionsarme bzw. emissionsfreie PU-Schaumstoffe im Sinne der Erfindung sind solche, die sowohl sehr niedrige Fogging-Werte (Niederschlag von organischen Verbindungen auf Oberflächen) als auch sehr niedrige VOC-Werte (volatile organic compounds), d.h. eine sehr geringe Tendenz zur Freigabe gasförmiger organischer Verbindungen, aufweisen. Die Katalysatoren sollen weiterhin hydrolysestabile PU-Schaumstoffe bilden und weiterhin positive Prozeß- und Produkteigenschaften aufweisen

Generell sind die Eigenschaften Geruch, "fogging", "staining" und Gesamtemission (VOC) alle auf die Freisetzung flüchtiger Bestandteile aus dem Schaumstoff zurückzuführen. Sie beschreiben jedoch völlig unterschiedliche Eigenschaften / Phänomene und stehen auch nicht notwendigerweise in Wechselwirkung miteinander. Geruch, fogging (Eigenschaft flüchtiger Bestandteile sich an kühleren Oberflächen, wie z.B. Windschutzscheiben niederzuschlagen ) und staining (Eigenschaft flüchtiger Amine, insbesondere PVC-haltige Materialien nachhaltig zu verfärben) beschreiben immer nur einen Teil, der durch die Emissionen von PU-Schäumen hervorgerufenen Probleme. Ausschließlich die Messung der flüchtigen Bestandteile durch GC/MS (VOC Messung) erlaubt die Gesamtemission aller flüchtigen organischen Bestandteile zu quantifizieren. Es ist z.B. ohne weiteres möglich, daß eine Geruchsreduzierung eines PU-Schaumes erreicht wird, trotzdem aber die Aminemission deutlich ansteigt.

Aus der US 3,448,065, US 5,539,007, US 3,728,291 und US 5,786,402 sind bereits Hydroxyalkylimidazole bzw. Aminoalkylimidazole bekannt, ohne dass jedoch die spezielle Katalysatorkombination der Erfindung aus diesen Veröffentlichungen hervorginge, dass bestimmte Hydroxyalkylimidazole bzw. Aminoalkylimidazole, insbesondere in Kombination mit anderen Katalysatoren, zu emissionsarmen und gleichzeitig hydrolysebeständigen Polyurethanen führen.

Es ist in der Fachwelt bekannt, daß die Verwendung von reaktiven meist Hydroxylgruppen beinhaltenden Katalysatoren zu einer Verschlechterung der Hydrolysebeständigkeit führt. Die Hydrolysebeständigkeit ist, z.B. im Bereich der Automobilindustrie, eine sehr wichtige Kenngröße zur Prüfung der Langlebigkeit eines PU-Schaumes. Alle Automobilfirmen spezifizieren diese Eigenschaft für Ihre Schäume. Ein wichtiges Maß für die Hydrolysebeständigkeit ist z.B. der "Druckverformungsrest nach Feucht/Wärmelagerung" gemäß ISO 2440.

Die zunehmende Sensibilisierung der Verbraucher gegenüber jeglicher vermeidbarer Belastung durch Chemikalien und der sich erweiternde Personenkreis mit allergischen Reaktionen gegenüber Chemikalien in der Raumluft, erfordert diese Reduzierung aller flüchtigen Bestandteile eines PU-Schaumstoffes.

Diese Aufgabe wird erfindungsgemäß gelöst durch ein Verfahren zur Herstellung emissionsarmer und hydrolysestabiler Polyurethan-Schaumstoffe gemäß Anspruch 1. Bevorzugte Ausführungsformen sind Gegenstand der weiteren Ansprüche.

Die Katalysatoren können durch folgende Strukturformel näher charakterisiert sein: 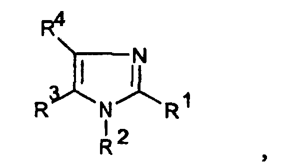 worin R¹ bis R⁴ , unabhängig voneinander, jeweils
- Wasserstoff
- lineare oder verzweigte C1- bis C12-, insbesondere C2- bis C6-, Alkylgruppen oder
- C2- bis C40-, insbesondere C2- bis C12-, Dialkylethergruppen oder Polyalkylethergruppen mit 1 bis 20, insbesondere 1 bis 8, Sauerstoff -Atomen sind,
wobei zumindest ein R, vorzugsweise R², für eine Alkylgruppe, Dialkylethergruppe oder eine Polyalkylethergruppe mit einer oder mehreren sekundären, HydroxyGruppe(n) (C1) bzw. Amino-Gruppe(n) (C2) steht. Besonders bevorzugt wird ein Katalysator vom Typ (C1) eingesetzt und weiterhin bevorzugt für diesen Fall auf den Einsatz des Katalysators gemäß (C2) verzichtet.

Bei Einsatz von 4,4- und 2,4- Diphenylmethandiisocyanat (MDI) haben sich als weiterere Katalysatoren (C3) 1,3-Bis(dimethylamino)-alkanole als besonders geeignet erwiesen.

Für Formschaumanwendungen ist der Einsatz von Alkalimetallsalzen oder zinnorganische Verbindungen als weitere Katalysatoren (C3) weniger bevorzugt. Für Blockschaum-Anwendungen dagegen werden vorzugsweise Dibutylzinndimercaptide als weitere Katalysatoren (C3) eingesetzt.

Die erfindungsgemäßen Katalysatoren können, zumindest bezogen auf den gesamten Herstellungsprozeß, in Kombination mit anderen Polyurethan-Katalysatoren eingesetzt werden. Dies können basische Polyurethankatalysatoren, beispielsweise tertiäre Amine, wie Dimethylbenzylamin, Dicyclohexylmethylamin, Dimethylcyclohexylamin, N,N,N-Tetramethyl-diamino-diethylether, Bis-(dimethylaminopropyl)-harnstoff, N-Methyl- bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethylaminoethoxy)ethanol, Tris-(dialkylaminoalkyl)-hexahydrotriazin, Di-(4-dimethylaminocyclohexyl)-methan Dimethylbenzylamin, Bis-dimethylaminoethylether, Tetramethylguanidin und Bis-dimethylaminomethyl-phenol und insbesondere Triethylendiamin sein. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat,. Dibutylzinndilaurat, Dibutylzinn-bis-dodecyl-mercaptit, und Blei-phenyl-ethyldithiocarbaminat, sowie insbesondere Mischungen aus tertiären Aminen und organischen Zinnsalzen.

Nach dem erfindungsgemäßen Verfahren sind Polyurethan-Schaumstoffe erhältlich mit VOC-Werte von kleiner 20 ppm, vorzugsweise kleiner 5 ppm, bezogen auf den von den Aminkatalysatoren hervorgerufenen Anteil der VOC-Werte und gemessen nach der von Daimler-Chrysler definierten Methode PB VWT 709 und Hydrolysestabilitäten von kleiner 22% gemessen nach ISO 2440.

Die erfindungsgemäßen Polyurethan-Schaumstoffe zeichnen sich somit durch den Einsatz bestimmter Katalysatoren aus. Zur Herstellung der erfindungsgemäßen Polyurethan-Schaumstoffe werden die Ausgangskomponenten (1) bis (2) eingesetzt und gegebenenfalls die Kettenverlängerungs- und/oder Vernetzungsmittel (3) in Gegenwart von Treibmitteln (4), und gegebenenfalls Flammschutzmitteln (5) sowie weiteren Hilfsmitteln und/oder Zusatzstoffen (6). Die Umsetzung erfolgt vorzugsweise bei Temperaturen von 0 bis 100 °C, vorzugsweise 15 bis 80 °C, wobei solche Mengenverhältnisse zur Reaktion gebracht, daß pro NCO- Gruppe 0,5 bis 2, vorzugsweise 0,8 bis 1,3 und insbesondere ungefähr 1, reaktive(s) Wasserstoffatom(e) gebunden an die Ausgangskomponenten (2) und (3) vorliegen und, sofern Wasser als Treibmittel eingesetzt wird, das Molverhältnis von Äquivalente Wasser zu Äquivalente NCO-Gruppe 0,5 bis 5 : 1, vorzugsweise 0,7 bis 0,95 : 1, beträgt.

Mit den erfindungsgemäßen Katalysatoren können sowohl weichelastische, semiflexible Schaumstoffe und Integralschaumstoffe hergestellt werden. Bevorzugt sind PU-Weichschaumstoffe, die als Block- oder Formweichschäume für alle üblichen Anwendungen, insbesondere Blockweichschäume für den Polsterbereich, insbesondere Matratzen, zur Schallisolierung, für Innenausstattungen von Automobilen und zur Herstellung von Laminaten, hergestellt werden können. Vorzugsweise werden die erfindungsgemäßen Formschäume in Innenräumen, die zumindest zeitweilig Temperaturen von 20 °C und höher (z.B. 40°C, 60°C und 80 °C) ausgesetzt sind und in denen sich zumindest zeitweilig Lebewesen aufhalten, eingesetzt.

Die Erfindung wird in den nachfolgenden Ausführungsbeispielen näher erläutert: Gegenstand der Untersuchungen sind PU-Schäume, hergestellt mit einer Serie unterschiedlicher Katalysatoren. Untersucht wurde in Bezug auf die Eigenschaft, flüchtige organische Verbindungen abzugeben, TDI basierte hoch elastische Formschaum - Formulierung, die auch als HR-Formschäume bezeichnet (HR = High resilient) werden. Zu diesem Zweck wurden PU-Schäume mit Hilfe verschiedener Gel-Katalysatoren und Blow-Katalysatoren hergestellt und verglichen. Als Standardformulierung wurden Komponenten gemäß Tabelle 1 eingesetzt, die jeweils mit Katalysatoren gemäß Tabelle 2 umgesetzt wurden. Die Herstellung der PU-Schäume erfolgte mit Hilfe von Handmischversuchen und maschinell.

### Handmischversuche:

Polyol, Wasser, DEOA, Silikone und Amin-Katalysator wurden in einer Pappgefäß und einer Rührerdrehzahl von 2500 U/min vorgemischt. Darauf erfolgte die Zugabe des Isocyanate, wobei das Rühren kurzzeitig fortgesetzt wurde. Die Reaktionsmischung wurde in einen Plastikbeutel überführt, so daß die Kremzeit, Steigzeit und Klebfreizeit gemessen werden konnten. Das Gewicht des Schaums betrug 300 g.

### Maschinelle Herstellung:

Die maschinelle Herstellung erfolgte mit einem 4-Komponeneten-Hochdruck-Krauss-Maffei-Dispensor. Neben dem TDI-80 Strom wurden drei unabhängige und einstellbare Polyol-Ströme eingesetzt. Der Hauptpolyol-Tank wurde mit einem Vorgemisch ohne Katalysator befüllt. Die beiden verbleibenden Ströme waren Polyol-Vormischung, in denen Blow-Katalysator bzw. Gel - Katalysator verdünnt vorlagen.

Frei steigende Schäume von etwa 265 g wurden in 200 x 200 x 200 mm Pappgefäßen hergestellt. Während des Schaumbildungsprozesses wurden Kremzeit, Gelzeit und Klebfreizeit mittels eines Tech DAPS 290 F Gerätes zur Bestimmung der Steigrate vermessen. Die Steighöhe wurde mit Ultraschall bestimmt, die Temperatur mittels Thermoelementen. Die Zugabe am Katalysator wurde so variiert, daß der Formschaum unter den folgenden Bedingungen herstellbar war:
- Testform: 450 x 450 x 90 mm Aluminium Legierung
- Formtemperatur 60 °C
- Temperatur des Ausgangsmaterials: 27 °C
- Schußzeit 6 s
- Schußgewicht ca.885 g
- Entformungszeit 6 min

Die folgenden Testverfahren wurden zur Bestimmung der physikalischen Eigenschaften angewandt:
- CLD 40%: DIN 53577
   (CLD compression load deflection, Stauchhärte,)
- ILD & SAG Faktor: DIN 53576
   (ILD indention load deflection, Eindruckhärte)
- Druckverformungsrest ASTM D 3574
   (compression set) (50 und 75% Verformung),
- HACS: ISO 2440 (75% Verformung)
   (Druckverformungsrest nach Feucht-/Wärmebehandlung)
- Zugfestigkeit: ASTM D 3574
- Reißfestigkeit ASTM D 3574
- Elastizität ASTM D 3574, Kugelfalltest
- Luft Permeabilität: interne Methode (Druck Differenz
   in wohl definiertem Luftstrom hPa)

### Die VOC- and Fogging-Meßmethode:

Die VOC- (gasförmige Emissionen) und Fogging-Werte wurden gemäß der von Daimler-Chrysler definierten Methode PB VWT 709 (Kunststoffe Ausgabe 5/6, 1999) bestimmt. Proben wurden 1 cm unter der Oberfläche der PU-Schäume genommen und für 7 Tage in verschlossenen Plastik Folien verwahrt. Danach wurden diese vermessen, indem die gasförmige Emissionen (VOC) und gasförmige kondensierbare Emissionen (Fogging) wie folgt bestimmt wurden. In einem Strom von Inertgas wurden die Proben (15 g) zunächst auf 90 ° C (fogging) und dann auf 120 ° C (VOC) gebracht. Die freigegebenen Verbindungen wurden in einem Gaschromatographie-Injektor gesammelt und durch GC getrennt und mittels Massenspektrometrie identifiziert.

Die Ergebnisse der Handmischversuche sind in Tabelle 3 zusammengetragen. Alle Gel-Katalysatoren - mit Ausnahme von PC CAT® API - lieferten brauchbare Ergebnisse, wenn diese mit Blow-Katalysatoren zusammen verwendet wurden.

Um akzeptable Aushärteprofile zu erhalten war der Zusatz von Zinnkatalysatoren erforderlich. Offenbar wird der Katalysator aufgrund der sehr reaktiven primären Amingruppe sehr schnell in das Polymer eingebaut und verliert an Aktivität und kann die notwendige Aushärtung des Schaums nicht mehr bewirken. Ein ähnliches Phänomen wurde auch mit anderen sehr reaktiven Katalysatoren beobachtet. Günstiger verhalten sich Amin-Katalysatoren mit sekundären Hydroxylgruppen wie in PC CAT® HPI, PC CAT® BDP und PC CAT® NP 15.

Insbesondere die Kombination des Säure blockierten Katalysators PC CAT® NP 93 FA und des Referenzkatalysators zeigte gute Prozeß- und Produkteigenschaften. Eine verhältnismäßig lange Kremzeit geht einher mit einer kurzen Klebfrei-Zeit. Dies bedeutet gute Fließfähigkeit und eine kurze Entformzeit. Auch der nicht blockierte Katalysator PC CAT® NP 15 und PC CAT® BDP zeigte eine akzeptables Verhältnis Kremzeit zu Klebfrei-Zeit, während PC CAT® NP 70 sehr lange noch eine Klebrigkeit aufwies und daher nicht weiter untersucht wurde.

Die sich in den Handmischversuchen als am geeignetsten erwiesenen Katalysator-Kombinationen wurden auch Maschinenversuchen ausgetestet. Zum Vergleich wurde auch eine Kombination von zwei Katalysatoren (PC CAT HPI und PC CAT API), die herkömmlicherweise beide als reaktive Gel- Katalysatoren eingestuft werden, geprüft. Die Ergebnisse sind in Tabelle 4 zusammengetragen.

Die physikalische Schaum-Charakteristik unterschied sich für die meisten Formulierungen kaum mit Ausnahme der Werte ermittelt als
- Druckverformungsrest nach Feucht-Wärmebehandlung (Wasserdampfbehandlung bei 120°C für 5h gefolgt von einer Trocknung für 16 h und einer Messung der Druckverformung) (HACS = humid aged compression set)
   und zu einem geringeren Ausmaß für die Werte ermittelt als
- Druckverformungsrest nach Feuchtbehandlung bei 95% Luftfeuchtigkeit und 70°C (wet compression set).

Wie sich aus Tabelle 4 ergibt, zeigten die Formschäume, die mit reaktiven Katalysatoren hergestellt waren, z.B. die Nummern A, B, E, F , G und J, die besten Ergebnisse. Die Katalysatoren, die in das Polymer eingebaut werden, zeigten jedoch hinsichtlich der Hydrolysestabilität der Formschäume negative Eigenschaften. Es zeigte sich ein beachtlicher Unterschied zwischen den Katalysatoren. PC CAT ® HPI zeigte in Kombination mit bestimmten Katalysatoren ausgezeichnete Eigenschaften während PC CAT ® BDP, PC CAT ®API und PC CAT ® NP 15 sich wegen mangelnder Hydrolysestabilität als ungeeignet erwiesen. Offensichtlich sind Formschäume hergestellt mit Katalysatoren enthaltend primäre Aminogruppen sensitiver gegenüber Feuchtigkeit als solche die Hydroxylgruppen aufweisen.

Im Allgemeinen kann man feststellen, daß der Austausch herkömmlicher nicht reaktiver Amin-Katalysatoren wie Triethylenediamin durch reaktive Amin-Katalysatoren wie PC CAT ® HPI die Prozeß- und Produkteigenschaften von TDI-basierten HR-Formschäumen nicht ungünstig beeinflußt aber die Emissionswerte dieser Formschäume günstig beeinflussen.

### VOC and Fogging Messungen:

In den volatilen Gasen der Proben wurden über 50 verschiedene Verbindungen dedektiert und durch ihr Massenspektrum identifiziert bzw. klassifiziert. Etwa 10 Gew.% der Verbindungen waren schwierig zu identifizieren. Es kann jedoch ausgeschlossen werden, daß es sich um Amin- oder Silikon-Verbindungen handelt.

In Tabelle 5 ist die Zusammensetzung der VOC der Formschäume dargestellt. Die Silikon-Verbindungen verursachen gewöhnlicherweise einen großen Teil der Emission. Aber auch die Aminverbindungen tragen beachtlich zur Emission bei, insbesondere wenn die Formschäume nicht durch Amin-Katalysatoren mit reaktiven Gruppen hergestellt sind.

Tabelle 5 zeigt den Anteil der Amin-Verbindungen an den Emissionen. Insbesondere PC CAT DMI verursacht eine beachtliche Emission (VOC) und auch die Blow-Katalysatoren werden durch Temperatureinfluß leicht freigesetzt. Die Katalysatoren PC CAT® HPI, PC CAT® API, CAT® NP 15 und PC CAT® BDP zeigten niedrige /keine VOC - Werte. Insbesondere PC CAT ® DMI , Triethylendiamin und Bisdimethylaminoethylether-basierte Katalysatoren zeigen eine hohe Emission.

Im Ergebnis hat sich der Gel-Katalysator PC CAT® HPI und der Blow-Katalysator PC CAT® BDP als besonders vorteilhaft erwiesen, weil diese hydrolysestabilere Formschäume liefern, ausgezeichnete Produkt- und Prozeßeigenschaften aufweisen und sehr niedrige Fogging- und VOC-Werte aufweisen. Die VOC-Werte werden gegenüber herkömmlichen Katalysatoren um 40 % reduziert, wobei die hergestellten Formschäume einen Amine-Anteil an den VOC-Gesamtwerten von weniger als 2% aufweisen.

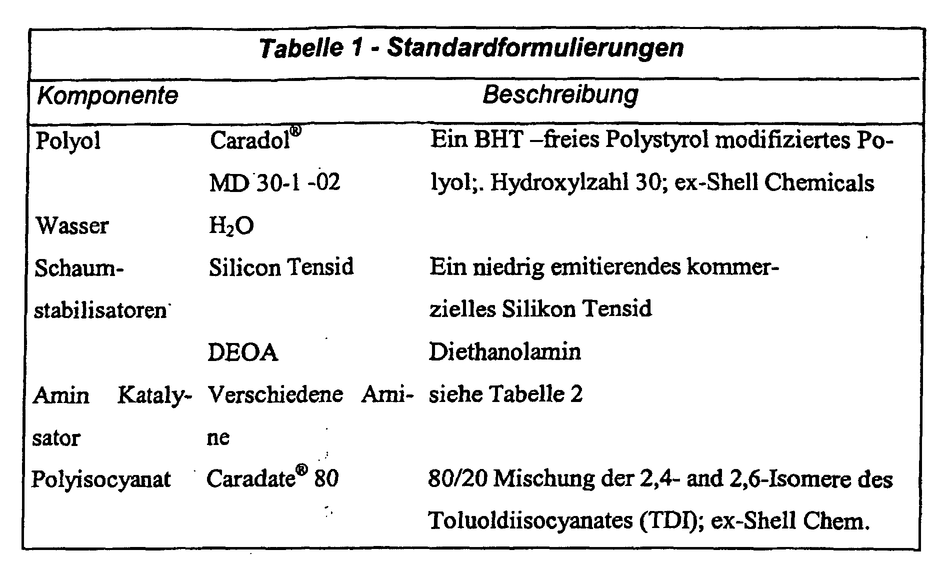

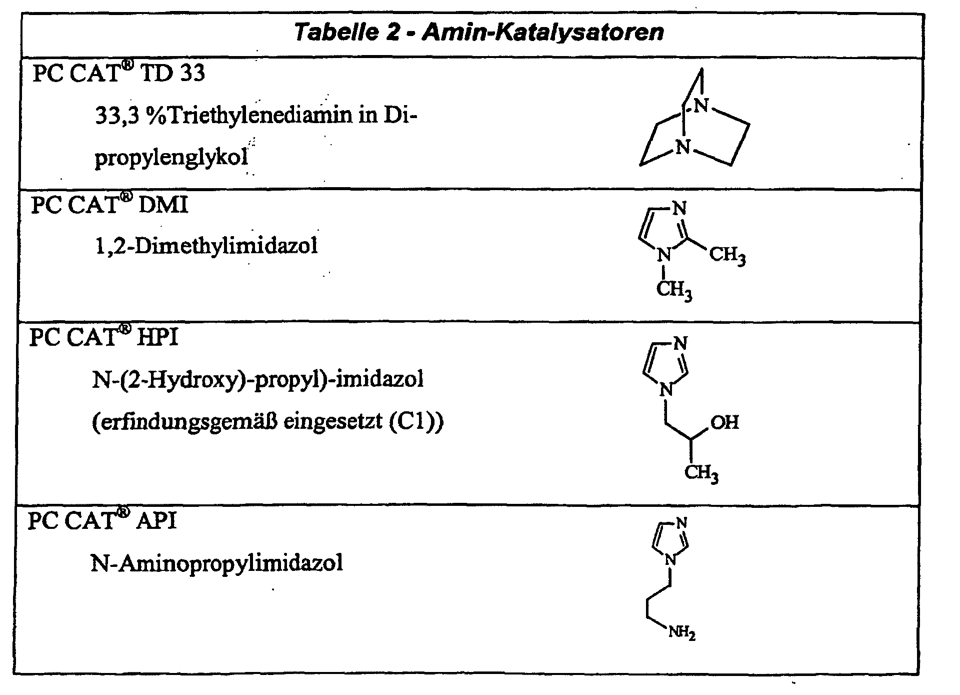

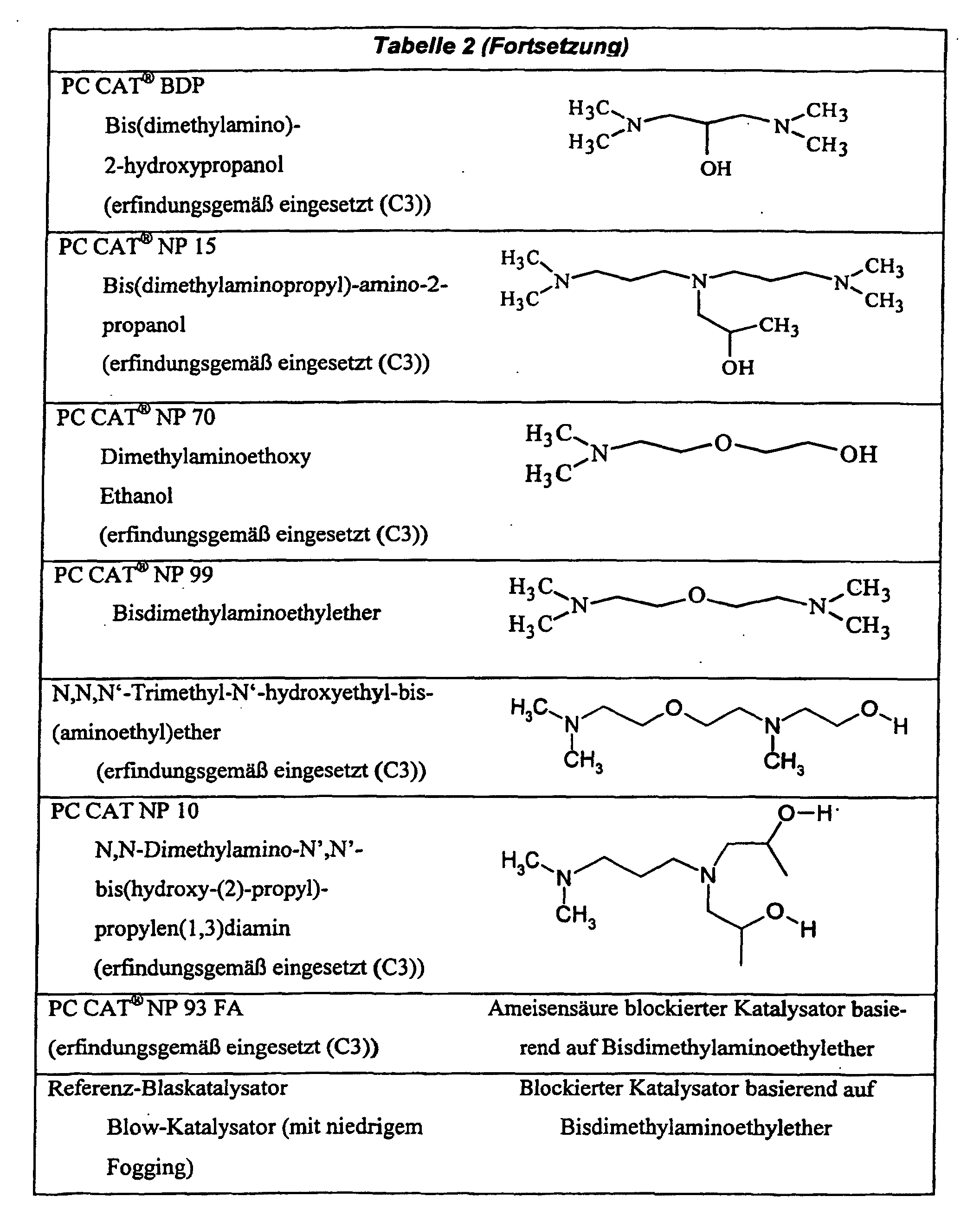

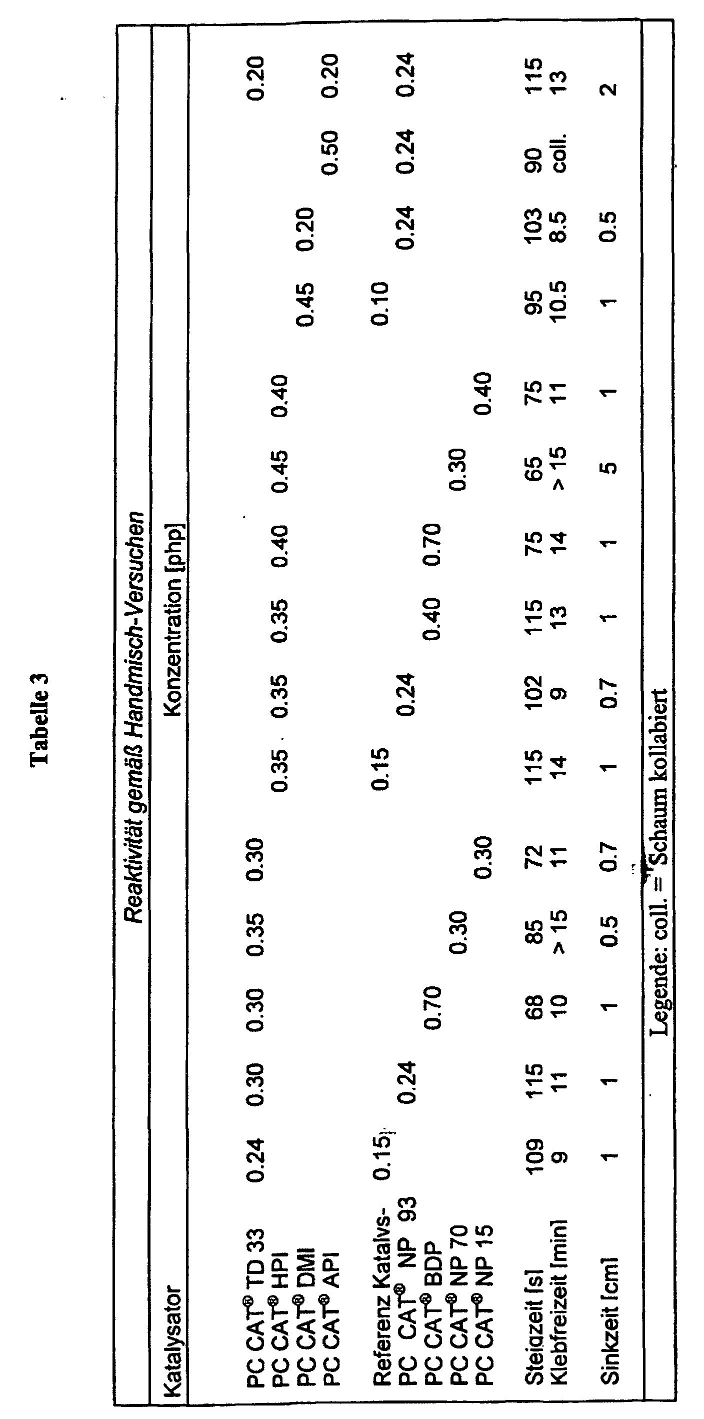

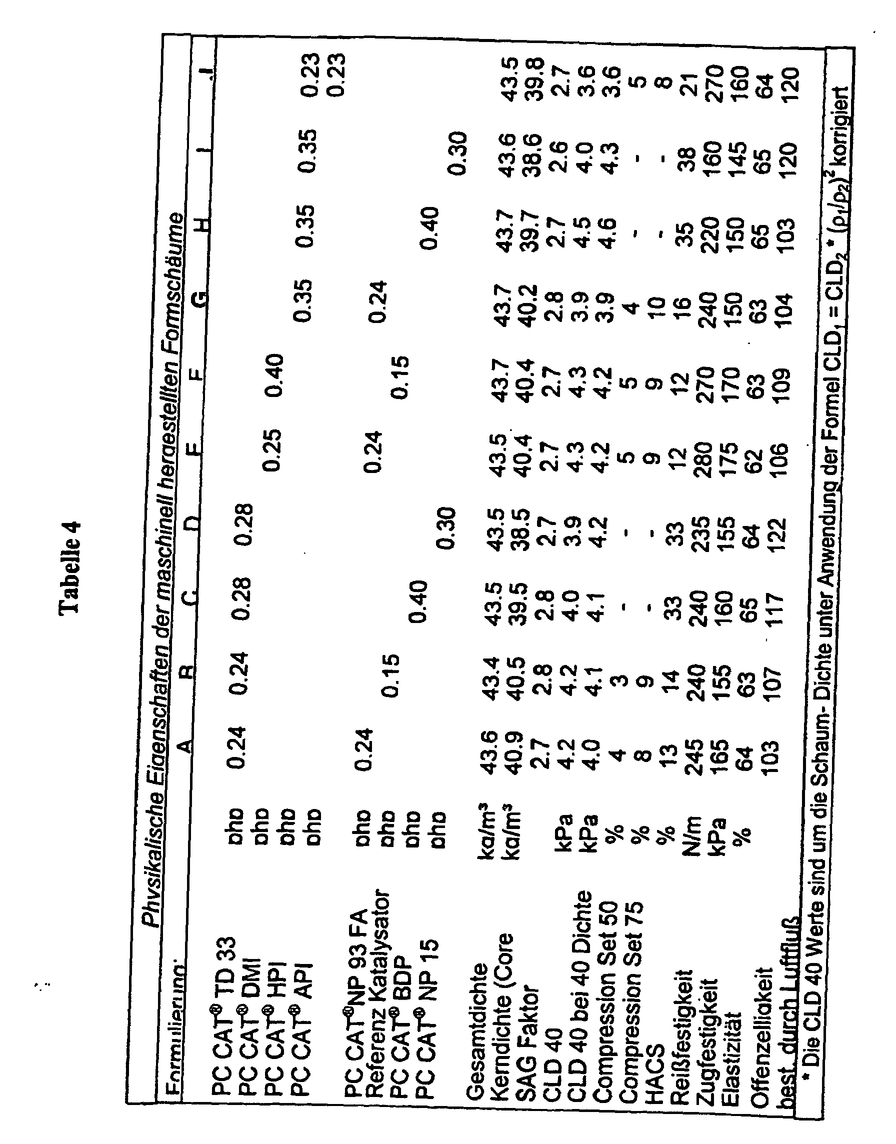

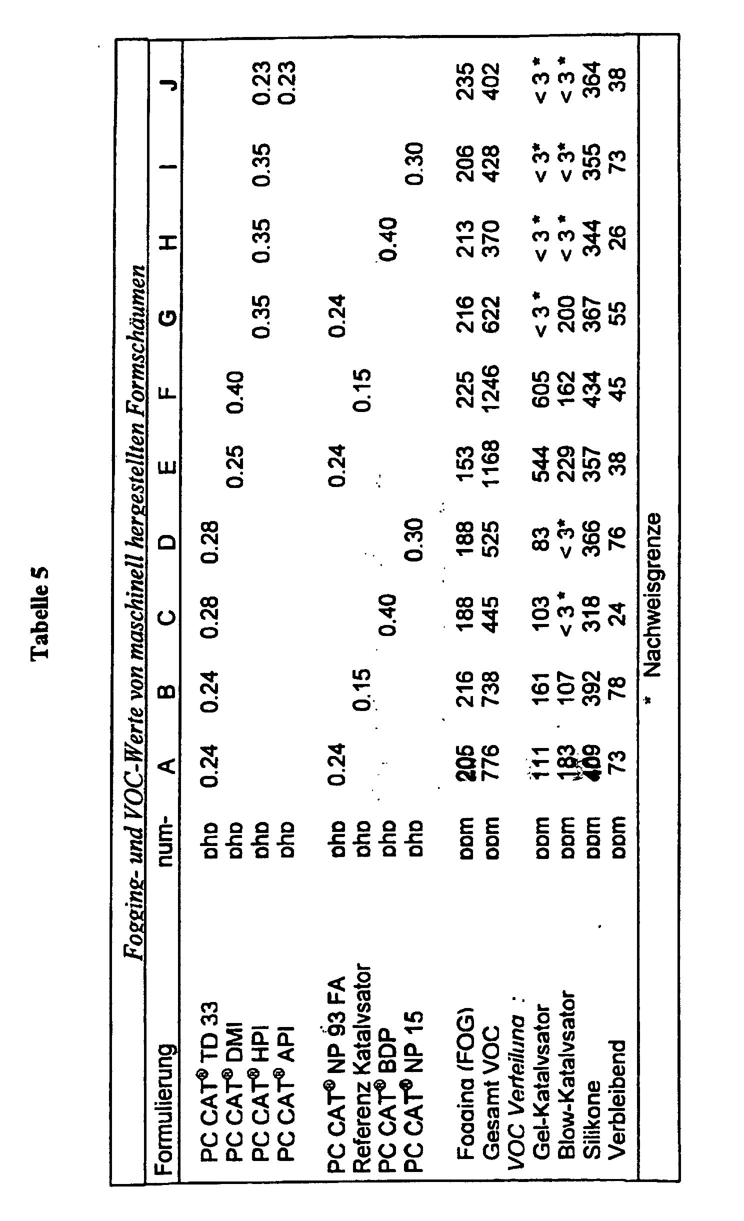

## Patentansprüche

1. Verfahren zur Herstellung emissionsarmer und hydrolysestabiler Polyurethan-Schaumstoffe durch Umsetzung von
(A) Verbindungen enthaltend mindestens zwei Isocyanat-Gruppen mit
(B) Verbindungen enthaltend mindestens zwei reaktive Wasserstoffatome in Gegenwart eines oder mehrerer Katalysatoren (C),
wobei zumindest einer der Katalysatoren
(C1) eine Hydroxy( alkyl / alkylether ) imidazol - Verbindung ist, die lediglich Hydroxy-Gruppen an sekundären Kohlenstoffatomen aufweist und/oder
(C2) eine Amino( alkyl / alkylether ) imidazol - Verbindung ist, die lediglich Amin-Gruppen an sekundären Kohlenstoffatomen aufweist, und
neben Katalysator (C1) und/oder Katalysator (C2) zumindest ein weiterer Katalysator (C3) eingesetzt wird, wobei der weitere Katalysator
(C3) - neben 3 bis 40 Kohlenstoff-Atomen ein oder mehrere Hydroxy-Gruppen und ein oder mehrere tertiäre Amin-Gruppen neben ggf. Etherbindungen aufweist und / oder
- Dibutylzinndimercaptid ist und / oder
- ein blockierter Bisdimethylaminoalkylether und / oder
- N,N,N',N'-Tetramethyliminobispropylamin ist.

2. Verfahren gemäß Anspruch 1, **dadurch gekennzeichnet, dass** zumindest einer die Katalysatoren
(C1) eine Hydroxy(alkyl/alkylether)imidazol - Verbindung bzw.
(C2) eine Amino( alkyl/ alkylether )imidazol - Verbindung des Typs 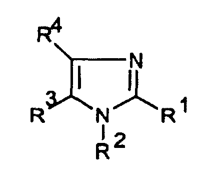 ist, worin R¹ bis R⁴ , unabhängig voneinander, jeweils
- Wasserstoff
- lineare oder verzweigte C1- bis C12- Alkylgruppen oder
- C2- bis C40- Dialkylethergruppen oder Polyalkylethergruppen mit 1 bis 20 Sauerstoff-Atomen sind,
wobei zumindest ein R für eine Alkylgruppe, Dialkylethergruppe oder eine Polyalky lethergruppe mit einer oder mehreren Hydroxy-Gruppe(n) (C1) bzw. Amino-Gruppe(n) (C2) steht und vorzugsweise N-(2-Hydroxy)-propyl)-imidazol ist.

3. Verfahren gemäß einem der vorhergehenden Ansprüche, **dadurch gekennzeichnet, daß** als Katalysator (C1) bzw. (C2) zumindest der Katalysator (C1) eingesetzt wird.

4. Verfahren gemäß einem der vorhergehenden Ansprüche, **dadurch gekennzeichnet, daß** der weitere Katalysator (C3) ausgewählt aus der folgenden Gruppe eingesetzt wird: blockierte Bisdimethylaminoalkylether; insbesondere Bisdimethylaminodiethylether; Dimethyl-2-(2-aminoethoxy)alkanole, insbesondere Dimethyl-2-(2-aminoethoxy)ethanol; N',N'-Dimethylaminoethyl-N-methylalkanolamine, insbesondere N',N'-Dimethylaminoethyl-N-methylethanolamin; N,N,N'-Trimethyl-N'-hydroxyethyl-bis(aminoalkyl)ether und insbesondere N,N,N'-Trimethyl-N'-bydroxyethyl-bis-(aminoethyl)ether.

5. Verfahren gemäß einem der Ansprüche 1 bis 3, **dadurch gekennzeichnet, daß** zumindest ein weiterer Katalysator (C3), ggf. auch mehrere Katalysatoren, ausgewählt aus der folgenden Gruppe, eingesetzt werden:
- N,N,N'-Trimethyl-N'-hydroxy(C1- bis C4-)alkyl-bis(amino(C1- bis C6-)alkyl)-ether, insbesondere N,N,N'-Trimethyl-N'-hydroxyethyl-bis(aminoethyl)ether;
- N,N-bis(3-dimethylamino(C1- bis C4-)alkyl)-amino-(C1- bis C6-)alkanole, insbesondere N,N-bis(3-dimethylaminopropyl)amino-2-propanol;
- 1,3-Bis(dimethylamino)- (C1- bis C6-)alkanole insbesondere 1,3-Bis(dimethyl-amino)-2-propanol und
- N,N-Dimethylamino-N',N'-bis(hydroxy(C1- bis C4-)alkyl)-((C2- bis C6-alkylen)-diamine) insbesondere N,N-Dimethylamino-N',N'-bis(hydroxy-(2)-propyl-propylen(1,3)diamin.

6. Verfahren gemäß einem der vorhergehenden Ansprüche, **dadurch gekennzeichnet, daß** der Katalysator (C1) keine Hydroxy-Gruppen bzw. der Katalysator (C2) keine Amin-Gruppen aufweist an Kohlenstoffatomen, die einem Stickstoffatom benachbart sind.

7. Verfahren gemäß einem der vorhergehenden Ansprüche, **dadurch gekennzeichnet, daß** die erhältlichen Polyurethan-Schaumstoffe VOC-Werte von kleiner 20 ppm bezogen auf den von den Aminkatalysatoren hervorgerufenen Anteil der VOC-Werte und gemessen nach der von Daimler-Chrysler definierten Methode PB VWT 709 und Hydrolysestabilitäten von kleiner 22% gemessen nach ISO 2440 aufweisen.

8. Polyurethan-Schaumstoffe hergestellt
- nach einem der Verfahren gemäß einem der Ansprüche 1 bis 7, wobei die Polyurethan-Schaumstoffe in Bezug auf die Isocyanat-Komponente vorzugsweise im wesentlichen aus MDI, TDI und /oder MDI/TDI - Mischungen hergestellt sind;
- unter gemeinsamer Verwendung der in Anspruch 1, 2 oder 6 definierten Katalysatoren (C1) und (C2) und in Anwesenheit des Katalysators (C3) gemäß einem der Ansprüche 1, 4 oder 5.

9. Verwendung von 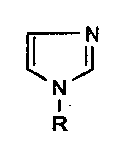 worin R eine lineare oder verzweigte C1- bis C12- Alkylgruppe oder eine C2- bis C40-Dialkylethergruppe oder eine Polyalkylethergruppe mit 1 bis 20 Sauerstoff-Atomen ist mit einer oder mehreren Hydroxy-Gruppe(n) (C1), wobei R lediglich Hydroxy-Gruppen an sekundären Kohlenstoffatomen aufweist und
insbesondere N-(2-Hydroxy)-propyl)-imidazol
als Katalysator zur Herstellung von emissionsarmen und hydrolysestabilen Polyurethan-Schaumstoffen erhältlich durch Umsetzung von (A) organischen Verbindungen enthaltend mindestens zwei Isocyanat-Gruppen und (B) organischen Verbindungen enthaltend mindestens zwei reaktive Wasserstoffatome, unter weiterem Einsatz zumindest eines der in den Ansprüchen 1 ,4 oder 5 definierten Katalysatoren (C3), wobei diese Polyurethan-Schaumstoffe VOC-Werte von kleiner 20 ppm, vorzugsweise kleiner 5 ppm, bezogen auf den von den Aminkatalysatoren hervorgerufenen Anteil der VOC-Werte und gemessen nach der von Daimler-Chrysler definierten Methode PBVWT 709 und Hydrolysestabilitäten von kleiner 22% gemessen nach ISO 2440 aufweisen.

## Claims

1. A method of producing low-emission and hydrolytically stable polyurethane foams by reacting
(A) compounds containing at least two isocyanate groups with
(B) compounds containing at least two reactive hydrogen atoms in the presence of one or more catalysts (C),
whereby at least one of the catalysts is
(C1) a hydroxy(alkyl/alkylether) imidazole compound comprising hydroxy groups on secondary carbon atoms only and/or
(C2) an amino(alkyl/alkylether) imidazole compound comprising amino groups on secondary carbon atoms only, and
in addition to catalyst (C1) and/or catalyst (C2) at least one other catalyst (C3) is used, whereby the other catalyst
(C3) - comprises in addition to 3 to 40 carbon atoms one or more hydroxy groups and one or more tertiary amine groups, optionally in addition to ether bonds, and/or is
- dibutyl stannous dimercaptide and/or
- a blocked bisdimethylaminoalkylether and/or
- N,N,N',N'-tetramethyliminobispropylamine.

2. A method according to Claim 1, **characterized in that** at least one of the catalysts is
(C1) a hydroxy(alkyl/alkylether)imidazole compound or
(C2) an amino(alkyl/alkylether)imidazole compound of the type 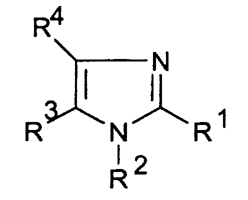 wherein R¹ to R⁴ are, independently of each other,
- hydrogen,
- linear or branched C1 to C12 alkyl groups or
- C2 to C40 dialkylether groups or polyalkylether groups with 1 to 20 oxygen atoms, whereby at least one R stands for an alkyl group, dialkylether group or a polyalkylether group with one or more hydroxy group(s) (C1) or amino group(s) (C2) and is preferably N-(2-hydroxy)-propyl-imidazole.

3. A method according to any one of the preceding claims, **characterized in that** at least the catalyst (C1) is used as catalyst (C1) or (C2).

4. A method according to any one of the preceding claims, **characterized in that** the other catalyst (C3) selected from the following group is used: blocked bisdimethylaminoalkylether, especially bisdimethylaminodiethylether, dimethyl-2-(2-aminoethoxy)alkanols, especially dimethyl-2-(2-aminoethoxy)ethanol; N',N'-dimethylaminoethyl-N-methylalkanolamines, especially N',N'-dimethylaminoethyl-N-methylethanolamine; N,N,N'-trimethyl-N'-hydroxyethyl-bis(aminoalkyl)ether and especially N,N,N'-trimethyl-N'-hydroxyethyl-bis(aminoethyl)ether.

5. A method according to any one of Claims 1 to 3, **characterized in that** at least one other catalyst (C3) and if necessary even several catalysts selected from the following group are used:
- N,N,N'-trimethyl-N'-hydroxy(C1 to C4) alkyl-bis(amino(C1 to C6)alkyl)ether, especially N,N, N'-trimethyl-N'-hydroxyethyl-bis(aminoethyl)ether,
- N,N-bis(3-dimethylamino (C1 to C4) alkyl)-amino-(C1 to C6)alkanols, especially N,N-bis(3-dimethylaminopropyl)amino-2-propranol;
- 1,3-bis(dimethylamino)- (C1 to C6)alkanols, especially 1,3-bis(dimethylamino)-2-propranol and
- N,N-dimethylamino-N',N'-bis(hydroxy(C1 to C4)alkyl)-((C2 to C6-alkylene)-diamines), especially N,N-dimethylamino-N',N'-bis(hydroxy(2)-propyl-propylene(1, 3) diamine.

6. A method according to any one of the preceding claims, **characterized in that** the catalyst (C1) has no hydroxy groups and the catalyst (C2) has no amine groups on carbon atoms that are adjacent to a nitrogen atom.

7. A method according to any one of the preceding claims, **characterized in that** the obtainable polyurethane foams have VOC values less than 20 ppm relative to the portion of VOC values produced by the amine catalysts and measured according to method PB VWT 709 defined by Daimler-Chrysler and have hydrolytic stabilities less than 22% measured according to ISO 2440.

8. A polyurethane foam produced
- according to one of the methods in accordance with any one of Claims 1 to 7, whereby the polyurethane foams are preferably produced substantially from MDI, TDI and/or MDI/TDI mixtures relative to the isocyanate component;
- with common usage of the catalysts (C1) and (C2) defined in Claim 1, 2 or 6 and in the presence of catalyst (C3) in accordance with one of Claims 1, 4 or 5.

9. The use of 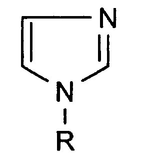 whereby R is a linear or branched C1 to C12 alkyl group or a C2 to C40 dialkylether group or a polyalkylether group with 1 to 20 oxygen atoms with one or several hydroxy group(s)
(C1), whereby R has only hydroxy groups on secondary carbon atoms, and especially N-(2-hydroxy)-propyl) imidazole
as catalyst for producing low-emission and hydrolytically stable polyurethane foams obtainable by reacting (A) organic compounds containing at least two isocyanate groups and (B) organic compounds containing at least two reactive hydrogen atoms, also using at least one of the catalysts (C3) defined in Claims 1, 4 or 5, whereby these polyurethane foams have VOC values of less than 20 ppm, preferably less than 5 ppm, relative to the portion of VOC values produced by the amine catalysts and measured according to method PBVWT 709 defined by Daimler-Chrysler and have hydrolytic stabilities less than 22% measured according to ISO 2440.

## Revendications

1. Procédé pour la préparation de mousses de polyuréthane à faible émission et stables à l'hydrolyse par réaction
(A) de composés contenant au moins deux groupes isocyanate avec
(B) des composés contenant au moins deux atomes d'hydrogène réactifs
en présence d'un ou de plusieurs catalyseurs (C),
dans lequel au moins l'un des catalyseurs
(C1) est un composé hydroxy(alkyl/alkyléther)imidazole, qui présente des groupes hydroxy uniquement sur des atomes de carbone secondaires et/ou
(C2) est un composé amino(alkyl/alkyléther)imidazole, qui présente des groupes amine uniquement sur des atomes de carbone secondaires, et
on utilise en plus du catalyseur (C1) et/ou du catalyseur (C2) au moins un autre catalyseur (C3), l'autre catalyseur
(C3) - présentant en plus de 3 à 40 atomes de carbone un ou plusieurs groupes hydroxy et un ou plusieurs groupes amine tertiaire en plus d'éventuelles liaisons éther et/ou
- étant un dibutylétaindimercaptide et/ou
- un bisdiméthylaminoalkyléther bloqué et/ou
- la N,N,N',N'-tétraméthyliminobispropylamine.

2. Procédé selon la revendication 1, **caractérisé en ce qu'**au moins l'un des catalyseurs est
(C1) un composé hydroxy(alkyl/alkyléther)imidazole, ou
(C2) un composé amino(alkyl/alkyléther)imidazole du type 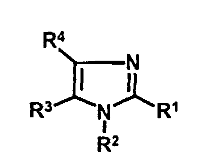 où R¹ à R⁴, indépendamment l'un de l'autre, sont respectivement
- un hydrogène,
- des groupes alkyle en C₁ à C₁₂ linéaires ou ramifiés ou
- des groupes dialkyléther en C₂ à C₄₀ ou des groupes polyalkyléther avec de 1 à 20 atomes d'oxygène,
dans lequel au moins un R représente un groupe alkyle, un groupe dialkyléther ou un groupe polyalkyléther, avec un ou plusieurs groupes hydroxy (C1) ou groupes amino (C2) et est de préférence le N-(2-hydroxy-propyl)-imidazole.

3. Procédé selon l'une quelconque des revendications précédentes, **caractérisé en ce que** l'on utilise comme catalyseur (C1) où (C2) au moins le catalyseur (C1).

4. Procédé selon l'une quelconque des revendications précédentes, **caractérisé en ce que** l'on utilise l'autre catalyseur (C3) choisi dans le groupe suivant : bisdiméthylaminoalkyléthers bloqués ; en particulier bisdiméthylaminodiéthyléther ; diméthyl-2-(2-aminoéthoxy)alcanols, en particulier diméthyl-2-(2-aminoéthoxy)éthanol ; N',N'-diméthylaminoéthyl-N-méthyl-alcanolamines, en particulier N',N'-diméthylaminoéthyl-N-méthyléthanolamine ; N,N,N'-triméthyl-N'-hydroxyéthyl-bis(aminoalkyl)éthers et en particulier N,N,N'-triméthyl-N'-hydroxyéthyl-bis(aminoéthyl)éther.

5. Procédé selon l'une quelconque des revendications 1 à 3, **caractérisé en ce que** l'on utilise au moins un autre catalyseur (C3), le cas échéant également plusieurs catalyseurs, choisis dans le groupe suivant :
- N,N,N'-triméthyl-N'-hydroxy(alkyle en C₁ à C₄)-bis(amino(alkyle en C₁ à C₆))éthers, en particulier le N,N,N'-triméthyl-N'-hydroxyéthyl-bis(amino-éthyl)éther ;
- N,N-bis(3-diméthylamino(alkyle en C₁ à C₄)amino-(alcanols en C₁ à C₆), en particulier le N,N-bis(3-diméthylaminopropyl)amino-2-propanol ;
- 1,3-bis(diméthylamino)-(alcanols en C₁ à C₆) en particulier le 1,3-bis(diméthylamino)-2-propanol et
- N,N-diméthylamino-N',N'-bis(hydroxy(alkyle en C₁ à C₄)-(alkylène en C₂ à C₆)diamines) en particulier la N,N-diméthylamino-N',N'-bis(hydroxy-(2)-propyl-propylène(1,3)diamine.

6. Procédé selon l'une quelconque des revendications précédentes, **caractérisé en ce que** le catalyseur (C1) ne présente pas de groupes hydroxy ou selon le cas le catalyseur (C2) ne présente pas de groupes amine sur des atomes de carbone, qui sont voisins d'un atome d'azote.

7. Procédé selon l'une quelconque des revendications précédentes, **caractérisé en ce que** les mousses de polyuréthane pouvant être obtenues présentent des valeurs COV inférieures à 20 ppm par rapport à la partie des valeurs de COV provenant des catalyseurs amine et mesurée selon la méthode définie par Daimler-Chrysler PB VWT 109 et des stabilités en hydrolyse inférieures à 22% mesurées selon la norme ISO 2440.

8. Mousses de polyuréthane préparées
- suivant l'un des procédés selon l'une quelconque des revendications 1 à 7, les mousses de polyuréthane, en ce qui concerne le composant isocyanate, étant de préférence préparées essentiellement à partir de MDI, TDI et/ou de mélanges MDI/TDI ;
- en utilisant en même temps les catalyseurs définis à la revendication 1, 2 ou 6 (C1) et (C2) et en présence du catalyseur (C3) selon l'une des revendications 1, 4 ou 5.

9. Utilisation de 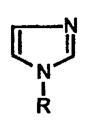 où R est un groupe alkyle en C₁ à C₁₂ linéaire ou ramifié ou un groupe dialkyléther en C₂ à C₄₀ ou un groupe polyalkyléther avec de 1 à 20 atomes d'oxygène avec un ou plusieurs groupes hydroxy (C1), R présentant uniquement des groupes hydroxy sur des atomes de carbone secondaires et
en particulier du N-(2-hydroxy-propyl)-imidazole comme catalyseur pour la préparation de mousses de polyuréthane à faible émission et stable à l'hydrolyse pouvant être obtenues par réaction de (A) des composés organiques contenant au moins deux groupes isocyanate et (B) des composés organiques contenant au moins deux atomes d'hydrogène réactifs, en utilisant encore au moins l'un des catalyseurs (C3) définis dans les revendications 1, 4 ou 5, ces mousses de polyuréthane présentant des valeurs de COV inférieures à 20 ppm, de préférence inférieures à 5 ppm, par rapport à la partie des valeurs de VOC provenant des catalyseurs amine et mesurées selon la méthode PBVWT 709 définie par Daimler-Chrysler et des stabilités à l'hydrolyse inférieures à 22% mesurées selon la norme ISO 2440.
